(19)

Europäisches
Patentamt

European
Patent Office

Office européen
des brevets

(11) **EP 4 525 330 A1**

(12) **EUROPEAN PATENT APPLICATION**

(43) Date of publication:
 **19.03.2025 Bulletin 2025/12**

(21) Application number: **24198959.9**

(22) Date of filing: **06.09.2024**

(51) International Patent Classification (IPC):
 **H04B 10/572** *(2013.01)* **H04J 14/02** *(2006.01)*

(52) Cooperative Patent Classification (CPC):
 **H04J 14/0241; H04B 10/2575; H04B 10/572;
 H04J 14/0272**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **12.09.2023 CN 202311179654**

(71) Applicant: **Nokia Solutions and Networks Oy
 02610 Espoo (FI)**

(72) Inventors:
 • **HUANG, Xiao An
   Shanghai, 200000 (CN)**
 • **ZHANG, Dong Xu
   Shanghai, 200129 (CN)**
 • **HU, Xiao Feng
   Shanghai, 201200 (CN)**
 • **ZHANG, Kai Bin
   Shanghai, 201204 (CN)**

(74) Representative: **DREISS Patentanwälte PartG
 mbB
 Friedrichstraße 6
 70174 Stuttgart (DE)**

(54) **APPARATUS, METHOD AND PHOTONIC FILTER FOR OPTICAL COMMUNICATION**

(57) Embodiments of the present disclosure relate to methods, apparatuses, photonic filters and computer-readable storage media for optical communication. In an example method, a first apparatus transmits initialization information to a second apparatus via an optical signal having a fixed optical wavelength, the initialization information at least comprises synchronization information for a network device associated with the second apparatus. The first apparatus selects, for the second apparatus, a tunable optical wavelength for optical communication of the second apparatus. The first apparatus further transmits tunable optical wavelength information for the tunable optical wavelength to the second apparatus via the optical signal having the fixed optical wavelength. In this way, the distribution of the common LO synchronization information can be supported, and the enhanced filtering performance can be achieved.

**EP 4 525 330 A1**

**Description**

**FIELD**

Embodiments of the present disclosure relate to the field of communications, and more specifically to methods, apparatuses, photonic filters and computer-readable storage media for optical communication.

**BACKGROUND**

The fifth-generation (5G) mobile networks have been deployed worldwide to achieve massive connectivity, ultra-reliability and low latency. The current 5G mobile networks cannot provide better coverage and uniform user performance over a wide coverage area. To improve the performance of cell-edge users, cell-free massive multiple-input multiple-output (CF-mMIMO) has been regarded as a promising candidate technology for the upcoming sixth-generation (6G) networks. A critical challenge for CF-mMIMO is the fronthaul which is responsible for massive data transmission and synchronization between the central processing unit (CPU) and the distributed access points (APs).

However, some techniques related to the optical communication need to be further researched and enhanced to optimize the performance of the fronthaul network of for example 6G network, or more generally to optimize the performance the communication network.

**SUMMARY**

In general, embodiments of the present disclosure relate to methods, apparatuses, photonic filters and computer-readable storage media for optical communication.

In a first aspect of the present disclosure, there is provided a first apparatus comprising: at least one processor and at least one memory, the at least one memory storing instructions that, when executed by the at least one processor, cause the first apparatus to at least: transmit initialization information to a second apparatus via an optical signal having a fixed optical wavelength, wherein the initialization information at least comprises synchronization information for a network device associated with the second apparatus; select, for the second apparatus, a tunable optical wavelength for optical communication of the second apparatus; and transmit tunable optical wavelength information for the tunable optical wavelength to the second apparatus via the optical signal having the fixed optical wavelength.

In a second aspect of the present disclosure, there is provided a second apparatus comprising: at least one processor and at least one memory, the at least one memory storing instructions that, when executed by the at least one processor, cause the second apparatus to at least: receive initialization information from a first apparatus via an optical signal having a fixed optical wavelength, wherein the initialization information at least comprises synchronization information for a network device associated with the second apparatus; synchronize the network device based on the synchronization information; receive, from the first apparatus and via the optical signal having the fixed optical wavelength, tunable optical wavelength information for the tunable optical wavelength for optical communication of the second apparatus; and configure, based on the received tunable optical wavelength information for the tunable optical wavelength, tunable circuit parameters corresponding to the tunable optical wavelength to generate an optical signal having the tunable optical wavelength for optical communication.

In a third aspect of the present disclosure, there is provided a photonic filter, comprising a first resonator that operates at a fixed optical wavelength; and a second resonator coupled to the first resonator, wherein the second resonator has the tunable circuit parameters and is operable at an optical wavelength corresponding to the tunable circuit parameters.

In a fourth aspect of the present disclosure, there is provided a method, comprising: transmitting initialization information to a second apparatus via an optical signal having a fixed optical wavelength, wherein the initialization information at least comprises synchronization information for a network device associated with the second apparatus; selecting, for the second apparatus, a tunable optical wavelength for optical communication of the second apparatus; and transmitting tunable optical wavelength information for the tunable optical wavelength to the second apparatus via the optical signal having the fixed optical wavelength.

In a fifth aspect of the present disclosure, there is provided a method, comprising: receiving initialization information from a first apparatus via an optical signal having a fixed optical wavelength, wherein the initialization information at least comprises synchronization information for a network device associated with the second apparatus; synchronizing the network device based on the synchronization information; receiving, from the first apparatus and via the optical signal having the fixed optical wavelength, tunable optical wavelength information for the tunable optical wavelength for optical communication of the second apparatus; and configuring, based on the received tunable optical wavelength information for the tunable optical wavelength, tunable circuit parameters corresponding to the tunable optical wavelength to generate the optical signal having the tunable optical wavelength for optical communication.

In a sixth aspect of the present disclosure, there is provided a first apparatus, comprising: means for transmitting initialization information to a second apparatus via an optical signal having a fixed optical wavelength, wherein the initialization information at least comprises synchronization information for a network device associated with the second apparatus; means for selecting, for the second apparatus, a tunable optical wavelength for optical communication of the second apparatus; and means for transmitting tunable optical wavelength information for the tunable optical wavelength to the second apparatus via the optical signal having the fixed optical wavelength.

In a seventh aspect of the present disclosure, there is provided a second apparatus, comprising: means for receiving initialization information from a first apparatus via an optical signal having a fixed optical wavelength, wherein the initialization information at least comprises synchronization information for a network device associated with the second apparatus; means for synchronizing the network device based on the synchronization information; means for receiving, from the first apparatus, tunable optical wavelength information for optical communication of the second apparatus; and means for configuring, based on the received tunable optical wavelength information for the tunable optical wavelength, tunable circuit parameters corresponding to the tunable optical wavelength to generate an optical signal having the tunable optical wavelength for optical communication.

In an eighth aspect of the present disclosure, there is provided a computer readable storage medium, comprising program instructions which when executed by at least one processor, cause a device to at least: transmit initialization information to a second apparatus via an optical signal having a fixed optical wavelength, wherein the initialization information at least comprises synchronization information for a network device associated with the second apparatus; select, for the second apparatus, a tunable optical wavelength for optical communication of the second apparatus; and transmit tunable optical wavelength information for the tunable optical wavelength to the second apparatus via the optical signal having the fixed optical wavelength.

In a ninth aspect of the present disclosure, there is provided a computer readable storage medium, comprising program instructions which when executed by at least one processor, cause a device to at least: receive initialization information from a first apparatus via an optical signal having a fixed optical wavelength, wherein the initialization information at least comprises synchronization information for a network device associated with the second apparatus; synchronize the network device based on the synchronization information; receive, from the first apparatus and via the optical signal having the fixed optical length, tunable optical wavelength information for the tunable optical wavelength for optical communication of the second apparatus; and configure, based on the received tunable optical wavelength information for the tunable optical wavelength, tunable circuit parameters corresponding to the tunable optical wavelength to generate an optical signal having the tunable optical wavelength for optical communication.

In a tenth aspect of the present disclosure, there is provided a computer program comprising instructions which, when executed by a device, causes the device to at least: transmit initialization information to a second apparatus via an optical signal having a fixed optical wavelength, wherein the initialization information at least comprises synchronization information for a network device associated with the second apparatus; select, for the second apparatus, a tunable optical wavelength for optical communication of the second apparatus; and transmit tunable optical wavelength information for the tunable optical wavelength to the second apparatus via the optical signal having the fixed optical wavelength.

In an eleventh aspect of the present disclosure, there is provided a computer program comprising instructions which, when executed by a device, causes the device to at least: receive initialization information from a first apparatus via an optical signal having a fixed optical wavelength, wherein the initialization information at least comprises synchronization information for a network device associated with the second apparatus; synchronize the network device based on the synchronization information; receive, from the first apparatus and via the optical signal having the fixed optical length, tunable optical wavelength information for the tunable optical wavelength for optical communication of the second apparatus; and configure, based on the received tunable optical wavelength information for the tunable optical wavelength, tunable circuit parameters corresponding to the tunable optical wavelength to generate an optical signal having the tunable optical wavelength for optical communication.

In a twelfth aspect of the present disclosure, there is provided a first apparatus, comprising: a transmitting circuit configured to transmit initialization information to a second apparatus via an optical signal having a fixed optical wavelength, wherein the initialization information at least comprises synchronization information for a network device associated with the second apparatus; a selecting circuit configured to select, for the second apparatus, a tunable optical wavelength for optical communication of the second apparatus; and a transmitting circuit configured to transmit tunable optical wavelength information for the tunable optical wavelength to the second apparatus via the optical signal having the fixed optical wavelength.

In a thirteen aspect of the present disclosure, there is provided a second apparatus, comprising: a receiving circuit configured to receive initialization information from a first apparatus via an optical signal having a fixed optical wavelength, wherein the initialization information at least comprises synchronization information for a network device associated with the second apparatus; a synchronizing circuit configured to synchronize the network device based on the synchronization information; a receiving circuit configured to receive, from the first apparatus and via the optical signal having the fixed optical length, tunable optical wavelength information for the tunable optical wavelength for optical communication of the second apparatus; and a configuring circuit configured to configure, based on the received tunable optical wavelength information for the tunable optical wavelength, tunable circuit parameters corresponding to the tunable optical wavelength to generate an optical signal having the tunable optical wavelength for optical communication.

It is to be understood that the Summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will be described with reference to figures wherein:

FIG. 1A illustrates an example communication network in which an embodiment of the present disclosure may be implemented;

FIG. 1B illustrates synchronization problems in CF-mMIMO;

FIG. 2 illustrates a process flow according to some example embodiments of the present disclosure;

FIG. 3 illustrates a RoF node and its internal photonic dual-filter according to some example embodiments of the present disclosure;

FIG. 4A shows a schematic diagram of use of the photonic dual-filter for a CF-mMIMO ring-based fronthaul, according to some example embodiments of the present disclosure;

FIG. 4B shows a schematic diagram of use of a photonic dual-filter for a CF-mMIMO tree-based fronthaul, according to some example embodiments of the present disclosure;

FIG. 5 illustrates an example flowchart of a photonic dual-filter for a CF-mMIMO fronthaul according to some example embodiments of this disclosure.

FIG. 6 illustrates a RoF node and its internal photonic dual-filter according to some example embodiments of the present disclosure;

FIGS. 7A and 7B illustrate performance evaluation of a photonic dual-filter according to some example embodiments of the present disclosure;

FIG. 7C illustrates performance evaluation of a photonic dual-filter optimized by a neural network (NN) method according to some example embodiments of the present disclosure;

FIG. 7D illustrates a layout design of a photonic integrated chip (PIC) of a photonic dual-filter according to some example embodiments of the present disclosure;

FIG. 8 illustrates a photonic dual-filter according to some example embodiments of the present disclosure;

FIG. 9 illustrates a flowchart of a method implemented on a first apparatus according to some example embodiments of the present disclosure;

FIG. 10 illustrates a flowchart of a method implemented on a second apparatus according to some example embodiments of the present disclosure;

FIG. 11 illustrates a simplified block diagram of an apparatus suitable for implementing an embodiment of the present disclosure; and

FIG. 12 illustrates a block diagram of an example computer-readable medium according to some embodiments of the present disclosure.

Throughout the drawings, the same or similar reference numerals represent the same or similar element.

## DETAILED DESCRIPTION

The principle and spirit of the present disclosure will be described below with reference to several example embodiments shown in the figures. It is to be understood that these specific embodiments are described only to enable those skilled in the art to better understand and implement the present disclosure, but not to limit the scope of the present disclosure in any way.

As used herein, the term "comprises" and its variants are to be read as open terms that mean "comprises, but is not limited to." The term "based on" is to be read as "based at least in part on." The term "an implementation" or "the implementation" is to be read as "at least one implementation." The term "first," "second," and the like may refer to different or the same objects. Other definitions, either explicit or implicit, might also be included below.

As used herein, the term "determine" encompasses a wide variety of actions. For example, "determining" may include operation, calculation, processing, derive, investigation, lookup (for example, lookup in a table, database, or another data structure), ascertain, etc. In addition, "determine" may include receiving (for example, receiving information), accessing (for example, accessing data in a memory), and so on. In addition, "determine" may include analyzing, selecting, choosing, establishing, and so on. As used in the text herein, "at least one of <a listing of two or more elements>" and "at least one of <a listing of two or more elements>" and the like, wherein the listing of two or more elements is connected by the word "and" or "or", which means at least any element in these elements, or at least any two or more elements in these elements, or at least all elements.

The term "circuitry" used in the text herein may refer to one or more of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a RoF network unit or other computing device, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in the present application, including in any claims. As a further example, as used in the present application, the term "circuitry" also covers an implementation of merely a hardware circuit or processor (or multiple processors) or portion of a hardware circuit or processor and its (or their) accompanying software and/or firmware. The term "circuitry" also covers, for example and if applicable to the particular claim element, a baseband integrated circuit or processor integrated circuit or a similar integrated circuit in the RoF network unit or other computing devices.

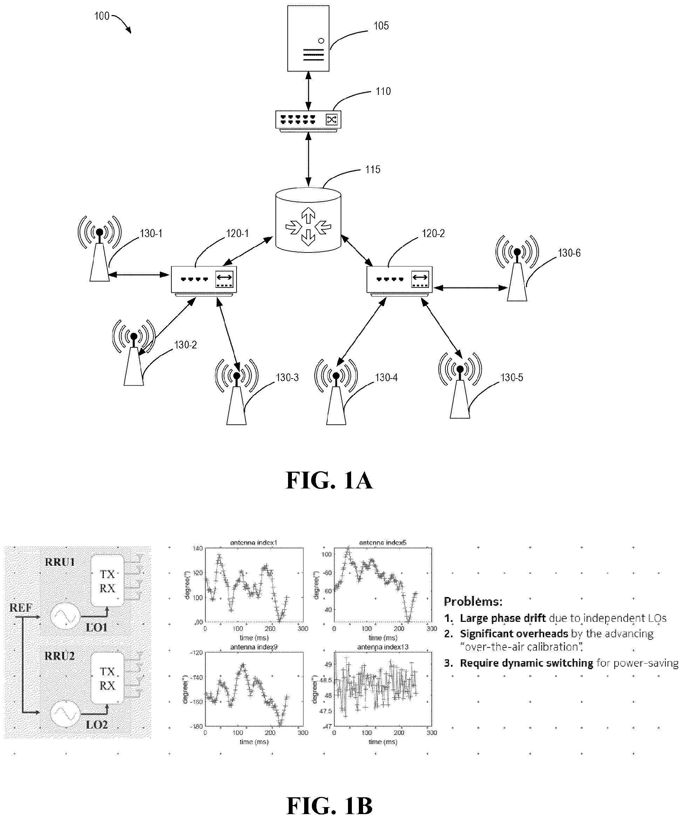

FIG. 1A illustrates an example communication network in which an embodiment of the present disclosure may be implemented. As shown in FIG. 1A, the communication network 100 includes a central processing unit (CPU) 105, a first apparatus 110, an optical distribution network (ODN) 115, second apparatus 120-1 and 120-2 (hereinafter collectively referred to as second apparatus 120), access points (APs) 130-1, 130-2, 130-3, 130-4, 130-5, 130-6 (hereinafter collectively referred to as APs 130). In some example embodiments, the first apparatus 110 may include a Radio-over-Fiber (RoF) transceiver (TRx) and the second apparatus 120 may include a RoF node. Thus, for ease of description, in some example embodiments below, the first apparatus 110 may also be referred to directly as a RoF TRx and the second apparatus 120 may also be referred to directly as a RoF node.

As shown in FIG. 1A, communication can be performed between the first apparatus 110 and the second apparatus 120 through the ODN 115. Thus, between the first apparatus 110 and the second apparatus 120, optical communication transmission can be performed through an uplink from the second apparatus 120 to the first apparatus 110. and optical communication transmission can also be performed through a downlink from the first apparatus 110 to the second apparatus 120. It is noted that although one first apparatus 110, two second apparatus 120, and six APs 130 are shown in FIG. 1A, any number of first apparatus 110, second apparatus 120, and APs 130 may be included in the communication network 100.

As mentioned above, the matured fronthaul technology is based on an Ethernet transport layer. Given that CF-mMIMO requires very high-quality carrier phase synchronization across distributed RF chains, the fronthaul could be problematic because Ethernet-based frequency synchronization suffers phase instability problems which may significantly degrade CF-mMIMO performance. Advanced "over-the-air calibration" techniques can be used to mitigate the phase drifting impacts but could introduce significant overheads. Directly distributing common local-oscillator (LO) synchronization information to the massive APs can be a solution, but is not supported by current fronthaul technologies. Besides, the power consumption may grow without bound due to network densification in CF-mMIMO, which necessitates the dynamic AP switch-ON/OFF strategies based on the traffic conditions.

The fronthaul network is better to also support dynamic switching instead of merely being static point-to-point links which wastes energy unnecessarily. Many of the fronthaul-related research efforts have been placed on the development of photonic-integrated-circuit (PIC) based transceivers which can offer unprecedented low power consumption, low cost, fast response time, and small footprint characteristics. Many have exploited PIC devices with wavelength flexibilities to implement flexible optical nodes for 5G mobile fronthaul. Micro-ring-resonator (MRR) -based PIC solutions stand out as one of the most promising ways of realizing dynamically configurable wavelength filters or add/drop devices. However, none of the previous studies considered supporting the unique requirements of phase synchronization, or LO distribution, in CF-mMIMO fronthauling scenarios.

FIG. 1B illustrates the synchronization problems in CF-mMIMO. The RoF TRx based CF-mMIMO fronthaul technology needs to address the following challenges:

Firstly, the current matured Ethernet-based frequency synchronization suffers severe phase drift problems, e.g., in 10ms, the phase drift is $2\pi\Delta ft = 36°$ with 1ppb stability at 10GHz RF, and could introduce significant overheads with the advanced over-the-air calibration techniques.

Secondly, the conventional PIC-based RoF transceivers can't support the common LO synchronization information for B5G/6G CF-mMIMO fronthauling.

Thirdly, the conventional design methodology of MRR-based PIC filters is very difficult to scale in terms of only supporting limited data-wavelength flexibility for B5G fronthaul (for instance, the design methodology of MRR-based PIC filters only realized 12 and 4 tunable wavelengths).

In view of the above, embodiments of the present disclosure provide a solution for optical communication using a photonic dual-filter. In some example embodiments, a first apparatus (e.g., a RoF TRx) transmits initialization information to a second apparatus (e.g., a RoF node) via an optical signal having a fixed optical wavelength, wherein the initialization information at least comprises synchronization information for a network device associated with the second apparatus; accordingly, the second apparatus receives the initialization information and synchronizes the network device based on the synchronization information.

Furthermore, the first apparatus selects, for the second apparatus, a tunable optical wavelength for optical communication of the second apparatus, and transmits tunable optical wavelength information for the tunable optical wavelength to the second apparatus via the optical signal having the fixed optical wavelength; accordingly, the second apparatus receives tunable optical wavelength information for the tunable optical wavelength from the optical signal having the fixed optical wavelength and configures, based on the tunable optical wavelength information for the tunable optical wavelength, tunable circuit parameters corresponding to the tunable optical wavelength to generate the optical signal having the tunable optical wavelength for optical communication. Through the photonic dual-filter design proposed by the solution, the distribution of the common LO synchronization information can be supported, and the enhanced filtering performance can be achieved.

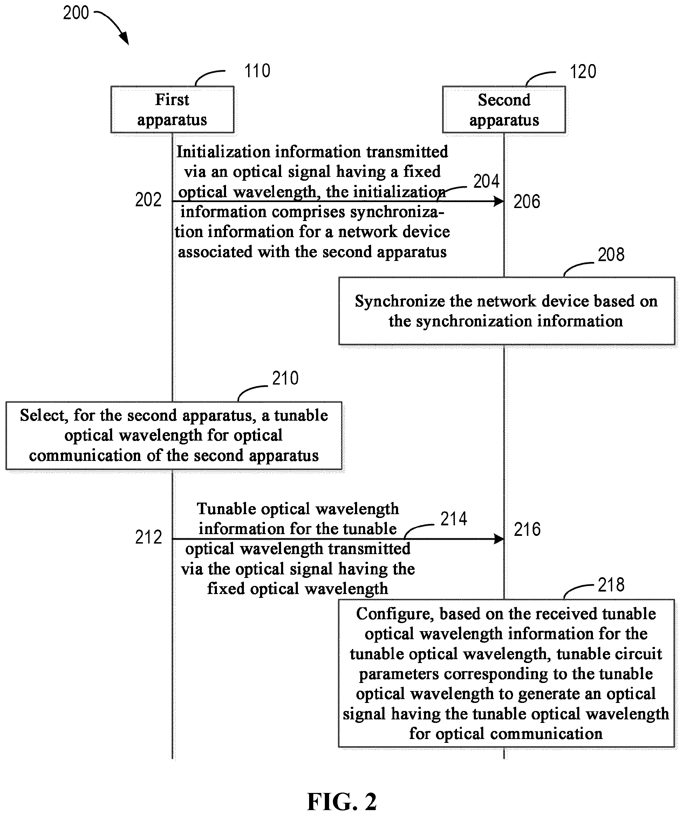

Hereinafter, exemplary embodiments of the present disclosure will be described in detail with reference to FIGS. 2 to 12.

FIG. 2 illustrates a processing procedure 200 according to some example embodiments of the present disclosure. For ease of discussion, the processing procedure 200 will be discussed with reference to FIG. 1A. The processing procedure 200 may involve the first apparatus 110 (e.g., RoF TRx) and the second apparatus 120 (e.g., RoF node) shown in FIG. 1A. In addition, the processing procedure 200 discussed with reference to FIG. 1A also involves the CPU 105 connected to the first apparatus 110 and the AP 130 connected to the second apparatus 120. However, for ease of description, the CPU 105 and the AP 130 are not shown in FIG. 2.

As shown in FIG. 2, the first apparatus 110 transmits 202 initialization information 204 to the second apparatus 120 via the optical signal having the fixed optical wavelength, the initialization information 204 at least including synchronization information for a network device (e.g., AP 130) associated with the second apparatus 120.

Accordingly, the second apparatus 120 receives 206 initialization information 204 from the first apparatus 110 via the optical signal having the fixed optical wavelength, the initialization information 204 at least including the synchronization information for the network device (e.g., AP 130) associated with the second apparatus 120.

In some embodiments, the synchronization information for the network device comprises common local oscillator (LO) synchronization information.

The second apparatus 120 synchronizes 208 the network device (e.g., AP 130) based on the synchronization information. In some embodiments, the second apparatus 120 phase synchronizes the network device connected to the second apparatus 120 based on the common local oscillator (LO) synchronization information.

The first apparatus 110 selects 210, for the second apparatus 120, a tunable optical wavelength for the optical communication of the second apparatus 120. In some embodiments, the selection of the tunable optical wavelength is based on traffic conditions of the network device, and the traffic conditions of the network device are reported by the network device to a processing device (e.g., the CPU 105) associated with the first apparatus 110.

The first apparatus 110 transmits 212 tunable optical wavelength information 214 for the tunable optical wavelength to the second apparatus 120 via the optical signal having the fixed optical wavelength. In some embodiments, the tunable optical wavelength information 214 for the tunable optical wavelength comprises scheduling information for the tunable optical wavelength.

In some embodiments, the first apparatus 110 further transmits the tunable circuit parameters to the second apparatus 120 via the optical signal having the fixed optical wavelength. For example, the tunable circuit parameters may be included in the initialization information 204; or the tunable circuit parameters may be transmitted together with the tunable optical wavelength information 214 for the tunable optical wavelength; or the tunable circuit parameters may be transmitted alone. Accordingly, the second apparatus 120 receives the tunable circuit parameters from the first apparatus 110 via the optical signal having the fixed optical wavelength. In addition, the tunable circuit parameters might also be pre-stored or pre-configured on the second apparatus 120.

Accordingly, the second apparatus 120 receives 216, from the first apparatus 110, the tunable optical wavelength information 214 for the tunable optical wavelength for optical communication of the second apparatus 120 via the optical signal having the fixed optical wavelength. Thereafter, the second apparatus 120 configures 218, based on the tunable optical wavelength information for the tunable optical wavelength, the tunable circuit parameters corresponding to the tunable optical wavelength to generate the optical signal having the tunable optical wavelength for optical communication. In some embodiments, the tunable circuit parameters comprise a coupling coefficient of a directional coupler and a phase of the waveguide.

In some embodiments, the second apparatus 120 transmits to the first apparatus 110 a ready signal (e.g., a first ready signal) indicating that the tunable circuit parameters have been configured. Accordingly, the first apparatus 110 receives, from the second apparatus 120, the first ready signal for indicating that the second apparatus 120 has already been configured with the tunable circuit parameters, and based on the received first ready signal, transmits to the processing device a second ready signal indicating that the second apparatus 120 has already been configured with the tunable circuit parameters.

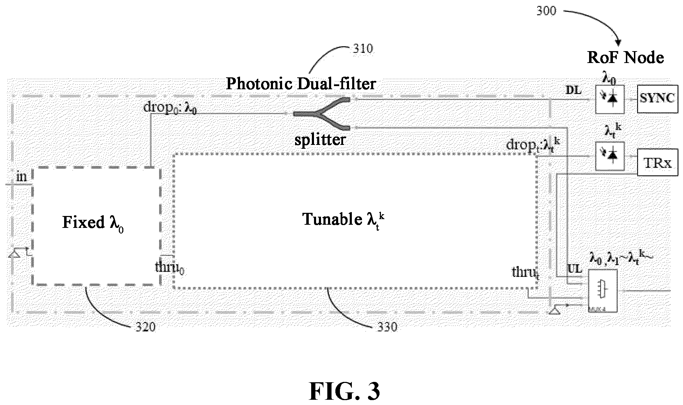

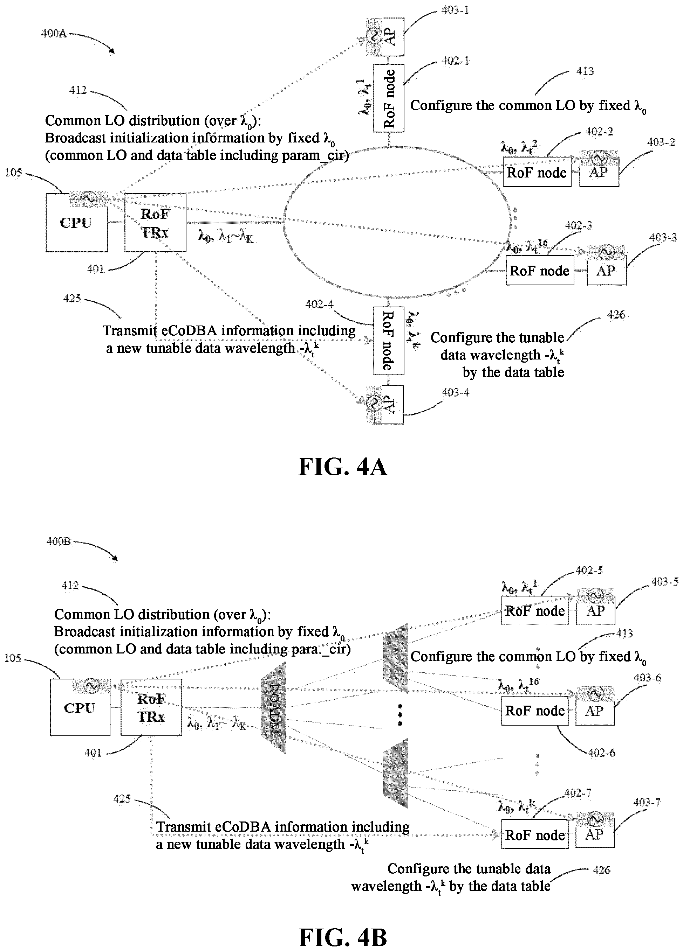

FIG. 3 illustrates a RoF node 300 and its internal photonic dual-filter 310 according to some example embodiments of the present disclosure. The photonic dual-filter 310 as shown in FIG. 3 may support the distribution of common LO synchronization information for B5G/6G green CF-mMIMO fronthauling and achieve enhanced filtering performance. The present disclosure utilizes the photonic dual-filter incorporating a double micro-ring resonator (MRR), the photonic dual-filter including a fixed optical wavelength $\lambda_0$ part 320 (i.e., a first part) and a tunable data wavelength -$\lambda_t^k$ part 330 (i.e., a second part) supporting the distribution of common LO synchronization information; as shown in FIG. 4A and FIG. 4B, the tunable data wavelength -$\lambda_t^k$ is allocated for a specific RoF node k according to reported traffic conditions (e.g., according to an AP ON/OFF (ASO) policy, where the ASO policy is based on the number and/or location of active user equipments (UEs), etc.), where t represents the tunable optical wavelength and k represents a RoF node identifier (id). As shown in FIG. 4A and FIG. 4B, the photonic dual-filter proposed by the present disclosure can be used for the ring-based fronthaul 400A and tree-based fronthaul 400B, respectively.

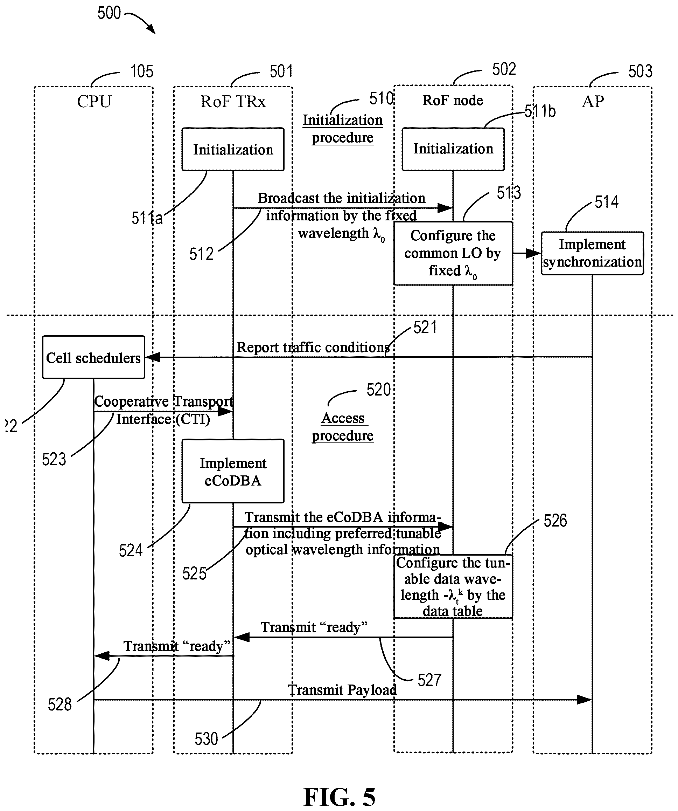

FIG. 5 illustrates an example flowchart 500 of use of a photonic dual-filter (hereinafter referred to as the dual-filter) for CF-mMIMO fronthaul, according to some example embodiments of this disclosure. The example flowchart 500 is described below with reference to FIG. 4A and FIG. 4B. As shown in FIG. 5, the example flowchart 500 at least includes an initialization procedure 510 and an access procedure 520. After the initialization, the RoF TRx 501 will broadcast initialization information by the fixed optical wavelength $\lambda_0$, the initialization information including common LO synchronization information and a data table, where the data table includes the tunable circuit parameters (param_cir) for data -$\lambda_t^k$ configuration). The proposed dual-filter includes a fixed optical wavelength $\lambda_0$ part (i.e., a first part) and a tunable data wavelength -$\lambda_t^k$ part (i.e., a second part). The initialization and configuration of the dual-filter includes the following two procedures:

The first procedure is the initialization procedure 510. RoF TRx 501 and RoF node 502 are subjected to initialization operations 511a and 511b, respectively before working. For example, during the initialization procedure 510, at 511b, the first part of the dual-filter of each RoF node 502 should be configured to have the fixed optical wavelength $\lambda_0$ (e.g., 1310 nm), and the second part in the dual-filter of each RoF node 502 should set $\lambda_t^k$ as a default $\lambda_1$ (e.g., 1550 nm) for normal working. After initialization operations 511a and 511b, RoF TRx 501 will broadcast initialization information to all RoF nodes 502 by the fixed optical wavelength $\lambda_0$ (512). For example, the operation 512 may correspond to operation 412 in FIG. 4A and FIG. 4B. The initialization information includes common LO synchronization information. In a first embodiment, the initialization information may further include a data table, where the data table includes the tunable circuit parameters (param_cir).

Thereafter, each AP 503 may perform synchronization (514) based on filtering through the fixed optical wavelength $\lambda_0$ to configure the common LO synchronization information (513). For example, the operation 513 may correspond to operation 413 in FIG. 4A and FIG. 4B, where one or more of RoF nodes 402-1, 402-2, 402-3, 402-4, 402-5, 402-6, 402-7 may configure the common LO synchronization information through the fixed optical wavelength $\lambda_0$ such that corresponding one or more APs in APs 403-1, 403-2, 403-3, 403-4, 403-5, 403-6, 403-7 perform synchronization.

The second procedure is the access procedure 520. During the access procedure 520, each AP 503 will report traffic conditions to the CPU 105 (521). Then, after a cell scheduler of CPU 105 performs cell scheduling (522), RoF TRx 501 will perform an enhanced Cooperative-Dynamic-Bandwidth-Allocation (eCoDBA) operation (524) through an operation (523) of a Cooperative-Transport-Interface (CTI), the operation including selecting a preferred optically tunable wavelength $\lambda_t^k$ for a specific RoF node 502.

Thus, the eCoDBA information including the preferred tunable data wavelength -$\lambda_t^k$ selected by RoF TRx 501 will be allocated and transmitted to the corresponding RoF node 502 (525). In a second embodiment, a data table including the tunable circuit parameters (param_cir) may be transmitted together with the eCoDBA information. In a third embodiment, the data table including the tunable circuit parameters (param_cir) may be transmitted alone. In a fourth embodiment, the RoF TRx 501 only transmits the tunable circuit parameters corresponding to the preferred tunable data wavelength -$\lambda_t^k$ to the corresponding RoF node 502. It is noted that a combination of the first, second, third and fourth embodiments described above are also possible. In addition, the tunable circuit parameters (param_cir) might be pre-stored or pre-configured on the RoF node 502.

For example, the operation 525 may correspond to the operation 425 in FIG. 4A and FIG. 4B, where the RoF TRx 401 may transmit the eCoDBA information to one or more RoF nodes in RoF nodes 402-1, 402-2, 402-3, 402-4, 402-5, 402-6, 402-7, the information including a new tunable data wavelength -$\lambda_t^k$.

In general, the eCoDBA information may include the tunable optical wavelength information, i.e., the eCoDBA information may include system scheduling information corresponding to the preferred tunable data wavelength $-\lambda_t^k$. Thereafter, the RoF node 502 will configure the tunable data wavelength $-\lambda_t^k$ filtering part through the data table (526) according to the first, second and third embodiments described above. That is, the RoF node 502 will select the tunable circuit parameters corresponding to the preferred tunable data wavelength $-\lambda_t^k$ from the data table according to the system scheduling information, and configure the tunable data wavelength $-\lambda_t^k$ filtering part through the tunable circuit parameters corresponding to the preferred tunable data wavelength $-\lambda_t^k$.

Alternatively or additionally, according to the fourth embodiment described above, the RoF node 502 will configure the tunable data wavelength $-\lambda_t^k$ filtering part directly through the tunable circuit parameters corresponding to the preferred tunable data wavelength $-\lambda_t^k$.

For example, the operation 526 may correspond to the operation 426 in FIG. 4A and FIG. 4B, where one or more of RoF nodes in RoF nodes 402-1, 402-2, 402-3, 402-4, 402-5, 402-6, 402-7 may configure the tunable data wavelength $-\lambda_t^k$ by the data table. After the configuration, the RoF node 502 may transmit a "ready" signal to the RoF TRx 501 (527), and RoF TRx 501 may transmit a "ready" signal to the CPU 105 based on the "ready" signal (528).

Thereafter, upon receiving the "ready" signal from the RoF TRx 501, the CPU 105 begins to transmit a fronthaul payload (530).

It is noted that as shown in FIG. 5, the proposed dual-filter may be implemented at each RoF node 502 nearby each AP 503, for the distribution of the common LO synchronization information and flexible filtering based on the reported traffic conditions targeting a very low-power consumption/green CF-mMIMO fronthaul. In addition, as shown in FIG. 3, the fixed optical wavelength $\lambda 0$ signal outputted by the fixed optical wavelength $\lambda_0$ part 320 (i.e., the first part) would be split into 2 streams: the top stream for the distribution of the common LO synchronization information in the downlink (DL); the bottom stream reused in the uplink (UL) for the ring-based fronthaul is not necessary for the tree-based fronthaul. In a more simplified example embodiment, for the three-based fronthaul, the fixed optical wavelength $\lambda_0$ signal outputted by the fixed optical wavelength $\lambda_0$ part 320 (i.e., the first part) is only used for the distribution of the common LO synchronization information. Furthermore, as shown in FIG. 5, in the present disclosure, the tunable circuit parameters param_cir may be trained by a PyTorch™-based NN in the RoF TRx 501 or CPU 105 or network computing unit. After the training, the data table including the tunable circuit parameters param_cir stated above may be stored in the RoF TRx 501. The data table may also be stored in each RoF Node during the initialization procedure 510 if necessary.

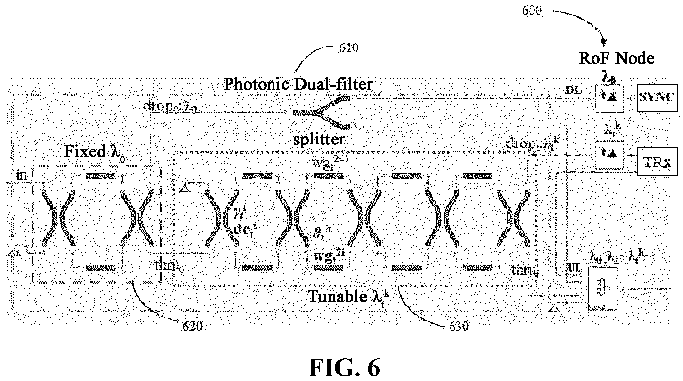

FIG. 6 illustrates a RoF node 600 and its internal photonic dual-filter 610 (hereinafter referred to as the dual-filter) according to some example embodiments of the present disclosure. As shown in FIG. 6, the proposed dual-filter includes waveguides (wg) and directional couplers (dc), which can be implemented by optical circuits of a suitable simulation tool. Here, the tunable circuit parameters param_cir may be represented as a coupling coefficient $\gamma_t^i$ of the directional coupler dc and a phase $\vartheta_t^{2i}$ of the even waveguide wg$^{2i}$, where the phase of the odd waveguide wg$^{2i-1}$ is set as zero and an index of the directional coupler dc/waveguide wg is represented as i. After deliberate consideration and detailed evaluations, the ring numbers of the fixed optical wavelength $\lambda_0$ part 620 (i.e., the first part) and the tunable data wavelength $-\lambda_t^k$ part 630 (i.e., a second part) are set as 1 and 4, respectively. It is noted that in order to achieve a better filtering performance, the key parameters $\gamma_t^i$ and $\vartheta_t^{2i}$ are trained in the RoF TRx by PyTorch™-based PIC optimization. Then, the dual-filter configured by the key parameters $\gamma_t^i$ and $\vartheta_t^{2i}$ of tunable param_cir inside each RoF Node is already successfully verified by the suitable simulation tool.

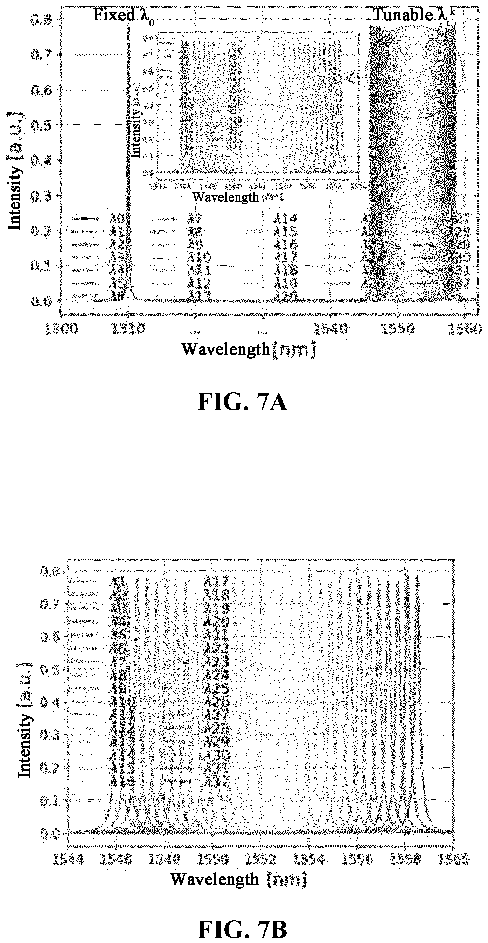

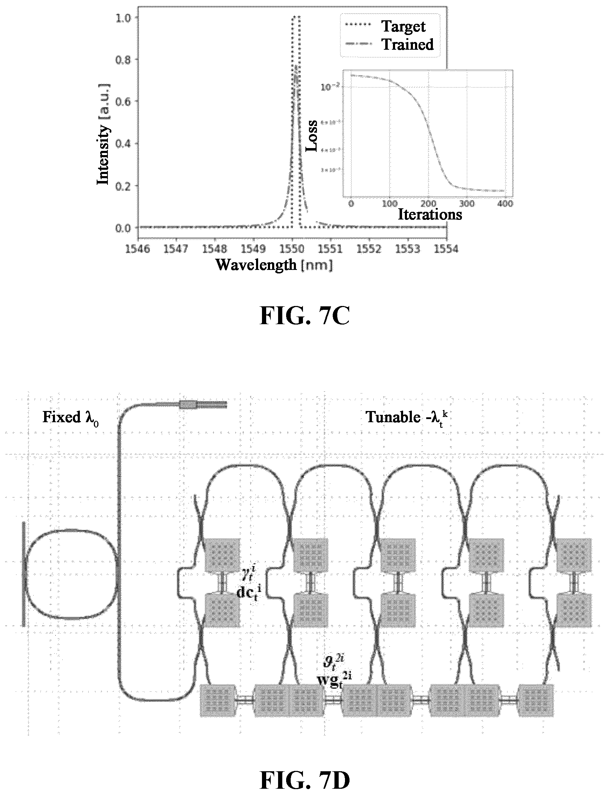

FIG. 7A and FIG. 7B illustrate performance evaluation of a photonic dual-filter according to some example embodiments of the present disclosure, and FIG. 7B is an enlarged view of the tunable part in FIG. 7A. As shown in FIGS. 7A and 7B, after the verification by the suitable simulation tool, the proposed photonic dual-filter may support the distribution of the common LO synchronization information with the fixed optical wavelength $\lambda_0$ and achieve excellent performance of 32X 50GHz-spaced tunable data wavelength $-\lambda_t^k$. It is noted that the proposed photonic dual-filter is trained by a neural network (NN)-based method with an optimum training loss 0.00206, as shown in FIG. 7C. In FIG. 7C, the neural network (NN)-based method achieves optimization at a target tunable optical wavelength $\lambda_t^k$ of 1550nm.

Regarding the hardware-implementation of the concept of the present disclosure, it is necessary to consider the practical PIC tape-out especially for the tunable data wavelength $-\lambda_t^k$ part (i.e., the second part) in the proposed photonic dual-filter. FIG. 7D illustrates a layout design of a photonic integrated chip (PIC) of a photonic dual-filter according to some example embodiments of the present disclosure. The possible PIC layout of the photonic dual-filter shown in FIG. 7D is drawn with an open-source EDA tool GDSfactory. In the tunable data wavelength $-\lambda_t^k$ part (i.e., the second part), the trained parameter $\gamma_t^i$ is realized by the Mach-Zehnder-Interferometer (MZI)-based couplers, and the parameter $\vartheta_t^{2i}$ may be implemented by using in-cavity thermo-optically tuned phase-shifters inside each ring. It is noted that the eventual device performance and stability could be very sensitive to various factors. In order to map the machine-learning optimized parameters to real device configuration details, waveguide-level physical simulations would be needed to thoroughly validate the PIC. In addition, adjustments may be carefully made to make sure the design is supported by foundries' process-design-kits.

For example, the advantages and application scenarios of the concept of embodiments of the present disclosure are reflected in but not limited to the following aspects:

Firstly, the photonic dual-filter according to embodiments of the present disclosure has the fixed optical wavelength $\lambda_0$ part and the 32X tunable data wavelength $-\lambda_t^k$ part, it may support the distribution of the common LO synchronization information and achieve the enhanced filtering performance, and aims to implement the B5G/6G green CF-mMIMO fronthaul.

Secondly, the photonic dual-filter according to embodiments of the present disclosure can support the 32X tunable data optical wavelength $\lambda_t^k$ by the neural network (NN)-based optimization.

Thirdly, the photonic dual-filter according to embodiments of the present disclosure can support the distribution of the common LO distribution information and excellent filtering performance at very low power consumption for B5G/6G green fronthauling or coherent/optical-access/Data-Center-Interconnection (DCI) systems, such as B5G/6G (e.g., cell-free/distributed/ extreme massive MIMO fronthauling/backhauling/midhauling), high-speed PON, and coherent/access/DCI systems.

Embodiments of the present disclosure may be used for B5G/6G fronthauling/backhauling/midhauling and high-speed coherent/PON/DCI product portfolio (such as ROADM, flexible optical nodes) or any other related serial communication (e.g. signal filtering/switch) with the necessity of advanced signal filtering/switch/-SYNC. Furthermore, embodiments of the present disclosure provide a new method for distribution of the common LO synchronization information and advanced pohotonic filter design, very beneficial for low-power photonic applications.

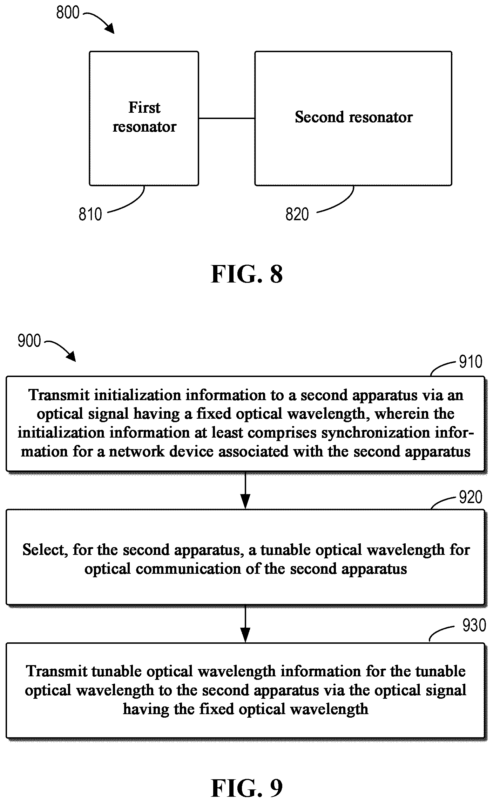

FIG. 8 illustrates a photonic filter 800 according to some example embodiments of the present disclosure. For example, photonic filter 800 may be a photonic dual-filter. In some embodiments, the photonic filter 800 may be implemented at RoF node 120 of FIG. IA. In other embodiments, the photonic filter 800 may also be implemented at RoF TRx 501 of FIG. 1A, any other RoF node or RoF TRx, or other device with similar functionality.

As shown in FIG. 8, the photonic filter 800 comprises a first resonator 810 that operates at a fixed optical wavelength. For example, in a case where the photonic filter 800 comprises the photonic dual-filter 310 shown in FIG. 3, the first resonator 810 may comprise the fixed optical wavelength $\lambda_0$ part 320. In a case where the photonic filter 800 comprises the photonic dual-filter 610 shown in FIG. 6, the first resonator 810 may include the fixed optical wavelength $\lambda_0$ part 620. In a case where the photonic filter 800 comprises the photonic dual-filter shown in FIG. 7D, the first resonator 810 may comprise the fixed optical wavelength part shown in FIG. 7D.

The photonic filter 800 further comprises a second resonator 820 coupled to the first resonator 810, and the second resonator 820 has the tunable circuit parameters and is operable at an optical wavelength corresponding to the tunable circuit parameters. For example, in a case where the photonic filter 800 comprises the photonic dual-filter 310 shown in FIG. 3, the second resonator 820 may comprise the tunable data wavelength $-\lambda_t^k$ part 330. In a case where the photonic filter 800 comprises the photonic dual-filter 610 shown in FIG. 6, the second resonator 820 may comprise the tunable data wavelength $-\lambda_t^k$ part 630. In a case where the photonic filter 800 comprises the photonic dual-filter shown in FIG. 7D, the second resonator 820 may comprise the tunable optical wavelength part shown in FIG. 7D.

In some embodiments, an input of the first resonator 810 is optically coupled to an optical distribution network ODN, an output of the first resonator 810 is optically coupled to an optical-to-electrical converter, and an output of the second resonator 820 is optically coupled to the optical-to-electrical converter. For example, the optical distribution network ODN may be the optical distribution network (ODN) 115 as shown in FIG. 1A.

In some embodiments, the first resonator 810 comprises a micro-ring resonator comprised of a directional coupler and a waveguide.

In some embodiments, the second resonator 820 comprises a plurality of micro-ring resonators, each micro-ring resonator of the plurality of micro-ring resonators is comprised of a directional coupler and a waveguide, and the tunable circuit parameters comprise a coupling coefficient of the directional coupler and a phase of the waveguide. For example, in a case where the photonic filter 800 comprises the photonic dual-filter 610 shown in FIG. 6, the second resonator 820 may comprise the tunable data wavelength $-\lambda_t^k$ part, the number of micro-ring resonators included in the second resonator 820 may be the number of rings in the tunable data wavelength $-\lambda_t^k$ part 630 (the number is set as 4 in FIG. 6), and the coupling coefficient of the directional coupler and the phase of the waveguide may be set as the

coupling coefficient $\gamma_t^i$ of the directional coupler dc and the phase of the waveguide wg, respectively, as shown in FIG. 6, where the phase of the even waveguide $\vartheta_t^{2i}$ and the phase of the odd waveguide wg$^{2i-1}$ is set as zero.

FIG. 9 illustrates a flowchart of a method 900 implemented on a first apparatus according to some example embodiments of the present disclosure. In some embodiments, the method 900 may be implemented at the first apparatus 110 of FIG. 1A. In other embodiments, the method 900 may also be implemented at any other first apparatus or other device having similar functionality.

At block 910, the first apparatus 110 transmits initialization information to the second apparatus 120 via an optical signal having a fixed optical wavelength, wherein the initialization information at least comprises synchronization information for a network device associated with the second apparatus 120. At block 920, the first apparatus 110 selects, for the second apparatus 120, a tunable optical wavelength for optical communication of the second apparatus. At block 930, the first apparatus 110 transmits tunable optical wavelength information for the tunable optical wavelength to the second apparatus 120 via the optical signal having the fixed optical wavelength.

In some embodiments, the synchronization information for the network device comprises common local oscillator synchronization information.

In some embodiments, the first apparatus further transmits tunable circuit parameters to the second apparatus via the optical signal having the fixed optical wavelength, and the tunable optical wavelength information for the tunable optical wavelength comprises scheduling information for the tunable optical wavelength.

In some embodiments, the selection of the tunable optical wavelength is based on traffic conditions of the network device, and the traffic conditions of the network device are reported by the network device to a processing device associated with the first apparatus.

In some embodiments, the first apparatus is further configured to receive, from the second apparatus, a first ready signal for indicating that the second apparatus has already been configured with the tunable circuit parameters; and based on the received first ready signal, transmit to the processing device a second ready signal indicating that the second apparatus has already been configured with the tunable circuit parameters.

In some embodiments, the first apparatus comprises a Radio-over-Fiber RoF transceiver unit, and the second apparatus comprises a Radio-over-Fiber RoF node unit.

In some embodiments, the tunable circuit parameters comprise a coupling coefficient of a directional coupler and a phase of a waveguide.

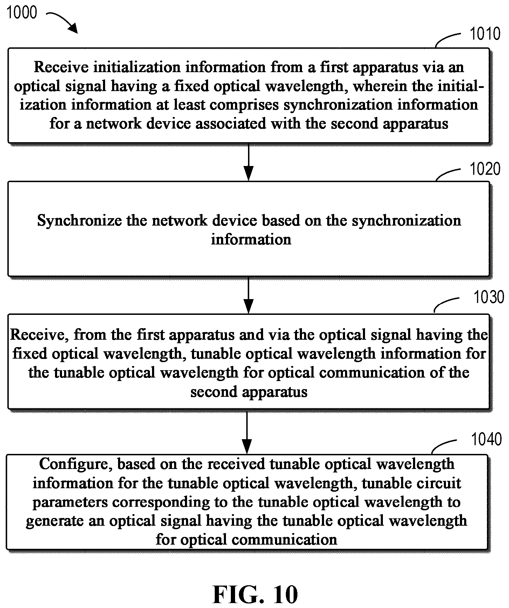

FIG. 10 illustrates a flowchart of a method 1000 implemented on a second apparatus according to some example embodiments of the present disclosure. In some embodiments, the method 1000 may be implemented at the second apparatus 120 of FIG. 1A. In other embodiments, the method 1000 may also be implemented at any other second apparatus or other device having similar functionality.

At block 1010, the second apparatus 120 receives initialization information from the first apparatus 110 via an optical signal having a fixed optical wavelength, wherein the initialization information at least comprises synchronization information for a network device associated with the second apparatus 120. At block 1020, the second apparatus 120 synchronizes the network device based on the synchronization information. At block 1030, the second apparatus 120 receives, from the first apparatus 110, the tunable optical wavelength information for the tunable optical wavelength for optical communication of the second apparatus 120 via the optical signal having the fixed optical wavelength. At block 1040, the second apparatus 120 configures, based on the received tunable optical wavelength information for the tunable optical wavelength, the tunable circuit parameters corresponding to the tunable optical wavelength to generate an optical signal having the tunable optical wavelength for optical communication.

In some embodiments, the initialization information comprises common local oscillator synchronization information, and the second apparatus phase synchronizes a network device connected to the second apparatus based on the common local oscillator synchronization information.

In some embodiments, the second apparatus is further configured to receive the tunable circuit parameters from the first apparatus via the optical signal having the fixed optical wavelength, and the tunable optical wavelength information for the tunable optical wavelength comprises scheduling information for the tunable optical wavelength.

In some embodiments, the tunable optical wavelength is selected by the first apparatus for the second apparatus based on traffic conditions reported to a network device of the first apparatus.

In some embodiments, the second apparatus is further configured to transmit, to the first apparatus, a ready signal indicating that the tunable circuit parameters have already been configured.

In some embodiments, the first apparatus comprises a Radio-over-Fiber RoF transceiver unit, and the second apparatus comprises a Radio-over-Fiber RoF node unit.

In some embodiments, the tunable circuit parameters comprise a coupling coefficient of a directional coupler and a phase of a waveguide.

In some embodiments, the first apparatus capable of performing the method 900 (e.g., the method is implemented at the first apparatus 110) may include means for performing the steps of the method 900. The means may be implemented in any suitable form. For example, the means may be implemented in circuitry or software modules.

In some embodiments, the first apparatus may comprise means for transmitting initialization information to the second apparatus via an optical signal having a fixed optical wavelength, wherein the initialization information at least comprises synchronization information for a network device associated with the second apparatus. The first apparatus may further comprise means for selecting, for the second apparatus, a tunable optical wavelength for optical communication of the second apparatus. The first apparatus may further comprise means for transmitting tunable optical wavelength information for the tunable optical wavelength to the second apparatus via the optical signal having the fixed optical wavelength.

In some embodiments, the synchronization information for the network device comprises common local oscillator synchronization information.

In some embodiments, the first apparatus may further comprise means for transmitting tunable circuit parameters to the second apparatus via the optical signal having the fixed optical wavelength, and the tunable optical wavelength information for the tunable optical wavelength comprises scheduling information for the tunable optical wavelength.

In some embodiments, the selection of the tunable optical wavelength is based on traffic conditions of the network device, and the traffic conditions of the network device are reported by the network device to a processing device associated with the first apparatus.

In some embodiments, the first apparatus may further comprise means for receiving, from the second apparatus, a first ready signal for indicating that the second apparatus has already been configured with the tunable circuit parameters; and based on the received first ready signal, transmitting to the processing device a second ready signal indicating that the second apparatus has already been configured with the tunable circuit parameters.

In some embodiments, the first apparatus comprises a Radio-over-Fiber RoF transceiver unit, and the second apparatus comprises a Radio-over-Fiber RoF node unit.

In some embodiments, the tunable circuit parameters comprise a coupling coefficient of a directional coupler and a phase of a waveguide.

In some embodiments, the second apparatus capable of performing the method 1000 (e.g., the method is implemented at the second apparatus 120) may include means for performing the steps of the method 1000. The means may be implemented in any suitable form. For example, the means may be implemented in circuitry or software modules.

In some embodiments, the second apparatus may comprise means for receiving initialization information from the first apparatus via an optical signal having a fixed optical wavelength, wherein the initialization information at least comprises synchronization information for a network device associated with the second apparatus. The second apparatus may further comprise means for synchronizing the network device based on the synchronization information. The second apparatus may further comprise means for receiving, from the first apparatus and via the optical signal having the fixed optical wavelength, the tunable optical wavelength information for the tunable optical wavelength for optical communication of the second apparatus. The second apparatus may further comprise means for configuring, based on the received tunable optical wavelength information for the tunable optical wavelength, the tunable circuit parameters corresponding to the tunable optical wavelength to generate an optical signal having the tunable optical wavelength for optical communication.

In some embodiments, the initialization information comprises common local oscillator synchronization information, and the second apparatus phase synchronizes a network device connected to the second apparatus based on the common local oscillator synchronization information.

In some embodiments, the second apparatus is further configured to receive the tunable circuit parameters from the first apparatus via the optical signal having the fixed optical wavelength, and the tunable optical wavelength information for the tunable optical wavelength comprises scheduling information for the tunable optical wavelength.

In some embodiments, the tunable optical wavelength is selected by the first apparatus for the second apparatus based on traffic conditions reported to a network device of the first apparatus.

In some embodiments, the second apparatus may further comprise means for transmitting, to the first apparatus, a ready signal indicating that the tunable circuit parameters have already been configured.

In some embodiments, the first apparatus comprises a Radio-over-Fiber RoF transceiver unit, and the second apparatus comprises a Radio-over-Fiber RoF node unit.

In some embodiments, the tunable circuit parameters comprise a coupling coefficient of a directional coupler and a phase of a waveguide.

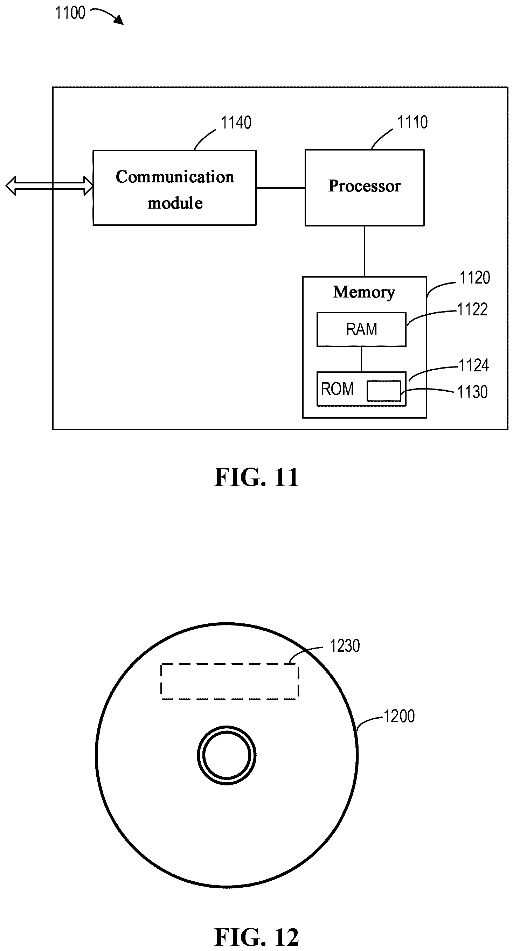

FIG. 11 is a simplified block diagram of an electronic device 1100 that is suitable for implementing embodiments of the present disclosure. The device 1100 may be provided to implement a communication device, for example, the first apparatus 110 and the second apparatus 120 shown in FIG. 1. As shown, the device 1100 comprises one or more processors 1110, one or more memories 1120 coupled to the processor 1110, and one or more communication modules 1140 coupled to the processor 1110.

The communication module 1140 is for bidirectional communications. For example, the communication module 1140 may include a transmitter, receiver, or transceiver for embodiments of the present disclosure. A communication interface may represent any interface necessary to communicate with other network elements.

The processor 1110 may be of any type suitable to the local technical network and may include but not limited to one or more of the following: general purpose computers, special purpose computers, microprocessors, Digital Signal Processors (DSPs) and one or more processors in a multicore controller architecture based on a controller. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a Read Only Memory (ROM) 1124, an Electrically Programmable Read Only Memory (EPROM), a flash memory, a hard disk, a Compact Disc (CD), a Digital Video Disk (DVD), and other magnetic storage and/or optical storage. Examples of the volatile memories include, but are not limited to, a Random Access Memory (RAM) 1122 and other volatile memories that will not last in the power-down duration.

A computer program 1130 comprises computer executable instructions that are executed by the associated processor 1110. The program 1130 may be stored in the ROM 1120. The processor 1110 may perform any suitable actions and processing by loading the program 1130 into the RAM 1120.

The example embodiments of the present disclosure may be implemented by means of the program 1130 so that the device 1100 may perform any process of the disclosure as discussed with reference to FIG. 2 through FIG. 10. The embodiments of the present disclosure may also be implemented by hardware or by a combination of software and hardware.

In some example embodiments, the program 1130 may be tangibly contained in a computer readable medium which may be included in the device 1100 (such as in the memory 1120) or other storage devices that are accessible by the device 1100. The device 1100 may load the program 1130 from the computer readable medium to the RAM 1122 for execution. The computer readable medium may include any types of tangible non-volatile storage, such as ROM, EPROM, a flash memory, a hard disk, CD, DVD, and the like.

FIG. 12 illustrates an example of the computer readable medium 1200 which may be in form of CD or DVD. The computer readable medium has the program 1230 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product comprises computer-executable instructions, such as those included in program modules, being executed in a device on a target physical or virtual processor, to carry out the methods 900 and 1000 as described above with reference to FIG. 9 and FIG. 10. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like. Examples of signals may include electrical, optical, radio, acoustic, or other forms of propagated signals, such as carrier waves, infrared signals, and the like.

A computer-readable medium may be any tangible medium that contains or stores a program used in or related to an instruction execution system, apparatus, or device. The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a Random Access Memory (RAM), a Read-Only Memory (ROM), an Erasable Programmable Read-Only Memory (EPROM or Flash memory), an optical storage device, a magnetic storage device, or any suitable combination thereof. As used herein, the term "non-transient" or "non-transitory" is a definition of the medium itself (i.e., tangible, rather than a signal), rather than a definition of the persistence of data storage (e.g., RAM and ROM).

In addition, although the operations of the method of the present disclosure are described in a specific order in the drawings, this does not require or imply that these operations must be performed in the specific order, or that all the operations shown must be performed to achieve a desired result. Conversely, the order of executing the steps depicted in the flowchart may be changed. Additionally or alternatively, some steps may be omitted, a plurality of steps may be combined into one step for execution, and/or one step may be divided into a plurality of steps for execution. It is noted that the features and functions of two or more devices according to the present disclosure may be embodied in one device. Conversely, the features and functions of one device described above may be embodied by a plurality of devices.

Although the present disclosure has been described with reference to several specific embodiments, it is to be understood that the present disclosure is not limited to the disclosed specific embodiments. The present disclosure is intended to cover various modifications and equivalent arrangements included within the spirit and scope of the appended claims.

## Claims

1. A first apparatus (110) comprising:

   at least one processor; and
   at least one memory storing instructions that, when executed by the at least one processor, cause the first apparatus (110) to at least:

   transmit (202) initialization information to a second apparatus (120) via an optical signal having a fixed optical wavelength, wherein the initialization information at least comprises synchronization information for a network device associated with the second apparatus (120);
   select (210), for the second apparatus (120), a tunable optical wavelength for optical communication of the second apparatus (120); and
   transmit (212) tunable optical wavelength information for the tunable optical wavelength to the second apparatus (120) via the optical signal having the fixed optical wavelength.

2. The first apparatus (110) according to claim 1, wherein the synchronization information for the network device comprises common local oscillator synchronization information.

3. The first apparatus (110) according to claim 1 or 2, wherein the first apparatus (110) is further configured to transmit tunable circuit parameters to the second apparatus via the optical signal having the fixed optical wavelength, and the tunable optical wavelength information for the tunable optical wavelength comprises scheduling information for the tunable optical wavelength, wherein for example the tunable circuit parameters comprise a coupling coefficient of a directional coupler and a phase of a waveguide.

4. The first apparatus (110) according to any of claims 1-3, wherein the selection of the tunable optical wavelength is based on traffic conditions of the network device, and the traffic conditions of the network device are reported by the network device to a processing device associated with the first apparatus (110).

5. The first apparatus (110) according to claim 3, wherein the first apparatus (110) is further configured to

   receive, from the second apparatus (120), a first ready signal for indicating that the second apparatus (120) has already been configured with the tunable circuit parameters; and
   based on the received first ready signal, transmit to the processing device a second ready signal indicating that the second apparatus (120) has already been configured with the tunable circuit parameters.

6. The first apparatus (110) according to any of claims 1-5, wherein the first apparatus (110) comprises a Radio-over-Fiber, RoF, transceiver unit, and the second apparatus (120) comprises a Radio-over-Fiber, RoF, node unit.

7. A second apparatus (120) comprising:

   at least one processor; and
   at least one memory storing instructions that, when executed by the at least one processor, cause the second apparatus (120) to at least:

   receive (206) initialization information from a first apparatus (110) via an optical signal having a fixed optical wavelength, wherein the initialization information at least comprises synchronization information for a network device associated with the second apparatus (120);
   synchronize (208) the network device based on the synchronization information;
   receive (216), from the first apparatus (110) and via the optical signal having the fixed optical wavelength, tunable optical wavelength information for the tunable optical wavelength for optical communication of the second apparatus (120); and
   configure (218), based on the received tunable optical wavelength information for the tunable optical wavelength, tunable circuit parameters corresponding to the tunable optical wavelength to generate an optical signal having the tunable optical wavelength for optical communication,

wherein for example the initialization information comprises common local oscillator synchronization information, and wherein the second apparatus (120) phase synchronizes the network device connected to the second apparatus (120) based on the common local oscillator synchronization information,

wherein for example the second apparatus (120) is further configured to receive the tunable circuit parameters from the first apparatus (110) via the optical signal having the fixed optical wavelength, and the tunable optical wavelength information for the tunable optical wavelength comprises scheduling information for the tunable optical wavelength,

wherein for example the tunable optical wavelength is selected by the first apparatus (110) for the second apparatus (120) based on traffic conditions reported to a network device of the first apparatus (110),

wherein for example the second apparatus (120) is further configured to:

transmit, to the first apparatus (110), a ready signal indicating that the tunable circuit parameters have already been configured,

wherein for example the first apparatus (110) comprises a Radio-over-Fiber RoF transceiver unit, and the second apparatus (120) comprises a Radio-over-Fiber RoF node unit,

wherein for example the tunable circuit parameters comprise a coupling coefficient of a directional coupler and a phase of a waveguide.

8. A photonic filter (800) comprising:

a first resonator (810) that operates at a fixed optical wavelength; and
a second resonator (820) coupled to the first resonator (810), wherein the second resonator (820) has tunable circuit parameters and is operable at an optical wavelength corresponding to the tunable circuit parameters,
wherein for example an input of the first resonator is optically coupled to an optical distribution network ODN, wherein an output of the first resonator is optically coupled to an optical-to-electrical converter, and wherein an output of the second resonator is optically coupled to the optical-to-electrical converter,

wherein for example the first resonator comprises a micro-ring resonator comprised of a directional coupler and a waveguide,
wherein for example the second resonator comprises a plurality of micro-ring resonators, each micro-ring resonator of the plurality of micro-ring resonators is comprised of a directional coupler and a waveguide, and wherein the tunable circuit parameters comprise a coupling coefficient of the directional coupler and a phase of the waveguide.

9. A method comprising:

transmitting (202) initialization information to a second apparatus (120) via an optical signal having a fixed optical wavelength, wherein the initialization information at least comprises synchronization information for a network device associated with the second apparatus (120);
selecting (210), for the second apparatus (120), a tunable optical wavelength for optical communication of the second apparatus (120); and
transmitting (212) tunable optical wavelength information for the tunable optical wavelength to the second apparatus (120) via the optical signal having the fixed optical wavelength.

10. A method comprising:

receiving (206) initialization information from a first apparatus (110) via an optical signal having a fixed optical wavelength, wherein the initialization information at least comprises synchronization information for a network device associated with the second apparatus (120);
synchronizing (208) the network device based on the synchronization information;
receiving (216), from the first apparatus (110) and via the optical signal having the fixed optical wavelength, tunable optical wavelength information for the tunable optical wavelength for optical communication of the second apparatus (120); and
configuring (218), based on the received tunable optical wavelength information for the tunable optical wavelength, tunable circuit parameters corresponding to the tunable optical wavelength to generate the optical signal having the tunable optical wavelength for optical communication.

11. A first apparatus (110) comprising:

means for transmitting (202) initialization information to a second apparatus (120) via an optical signal having a fixed optical wavelength, wherein the initialization information at least comprises synchronization information for a network device associated with the second apparatus (120);

means for selecting (210), for the second apparatus (120), a tunable optical wavelength for optical communication of the second apparatus (120); and

means for transmitting (212) tunable optical wavelength information for the tunable optical wavelength to the second apparatus (120) via the optical signal having the fixed optical wavelength.

12. A second apparatus (120) comprising:

means for receiving (206) initialization information from a first apparatus (110) via an optical signal having a fixed optical wavelength, wherein the initialization information at least comprises synchronization information for a network device associated with the second apparatus (120);

means for synchronizing (208) the network device based on the synchronization information;

means for receiving (216), from the first apparatus (110) and via the optical signal having the fixed optical wavelength, tunable optical wavelength information for the tunable optical wavelength for optical communication of the second apparatus (120); and

means for configuring (218), based on the received tunable optical wavelength information for the tunable optical wavelength, tunable circuit parameters corresponding to the tunable optical wavelength to generate an optical signal having the tunable optical wavelength for optical communication.

13. A computer readable storage medium comprising program instructions which, when executed by at least one processor, cause a device to at least perform the method according to any of claim 9 or 10.

**FIG. 1A**

**FIG. 1B**

200

110

**First apparatus**

120

**Second apparatus**

202

Initialization information transmitted
via an optical signal having a fixed
optical wavelength, the initialization
information comprises synchroniza-
tion information for a network device
associated with the second apparatus

204

206

208

Synchronize the network device based on
the synchronization information

210

Select, for the second apparatus, a tunable
optical wavelength for optical
communication of the second apparatus

212

Tunable optical wavelength
information for the tunable
optical wavelength transmitted
via the optical signal having the
fixed optical wavelength

214

216

218

Configure, based on the received tunable
optical wavelength information for the
tunable optical wavelength, tunable circuit
parameters corresponding to the tunable
optical wavelength to generate an optical
signal having the tunable optical wavelength
for optical communication

**FIG. 2**

**FIG. 3**

400A

412

Common LO distribution (over $\lambda_0$):
Broadcast initialization information by fixed $\lambda_0$
(common LO and data table including param_cir)

403-1

AP

402-1

RoF node

413

Configure the common LO by fixed $\lambda_0$

$\lambda_0, \lambda_t^1$

105

CPU

RoF TRx

401

$\lambda_0, \lambda_1 \sim \lambda_K$

$\lambda_0, \lambda_t^2$

402-2

RoF node

AP

403-2

402-3

$\lambda_0, \lambda_t^{16}$

RoF node

AP

403-3

425

Transmit eCoDBA information including
a new tunable data wavelength -$\lambda_t^k$

402-4

RoF node

$\lambda_0, \lambda_t^k$

426

Configure the tunable
data wavelength -$\lambda_t^k$
by the data table

AP

403-4

**FIG. 4A**

400B

412

Common LO distribution (over $\lambda_0$):
Broadcast initialization information by fixed $\lambda_0$
(common LO and data table including para._cir)

402-5

$\lambda_0, \lambda_t^1$

RoF node

AP

403-5

413

Configure the common LO by fixed $\lambda_0$

105

CPU

RoF TRx

401

ROADM

$\lambda_0, \lambda_1 \sim \lambda_K$

$\lambda_0, \lambda_t^{16}$

RoF node

AP

403-6

402-6

425

Transmit eCoDBA information including
a new tunable data wavelength -$\lambda_t^k$

$\lambda_0, \lambda_t^k$

402-7

RoF node

AP

403-7

Configure the tunable data
wavelength -$\lambda_t^k$ by the data table

426

**FIG. 4B**

500

105 — CPU
501 — RoF TRx
510 — Initialization procedure
502 — RoF node
503 — AP

Initialization — 511a

Initialization — 511b

Broadcast the initialization information by the fixed wavelength $\lambda_0$

512

Configure the common LO by fixed $\lambda_0$ — 513

Implement synchronization — 514

521 — Report traffic conditions

Cell schedulers

520 — Access procedure

Cooperative Transport Interface (CTI)

22

523

Implement eCoDBA

524

Transmit the eCoDBA information including preferred tunable optical wavelength information

525

526 — Configure the tunable data wavelength $-\lambda_t^k$ by the data table

Transmit "ready"

Transmit "ready"

528

527

530 — Transmit Payload

**FIG. 5**

FIG. 6

**FIG. 7A**

**FIG. 7B**

**FIG. 7C**

**FIG. 7D**

| First resonator | | Second resonator |
| --- | --- | --- |

810 820

## FIG. 8

800

900

910

Transmit initialization information to a second apparatus via an optical signal having a fixed optical wavelength, wherein the initialization information at least comprises synchronization information for a network device associated with the second apparatus

920

Select, for the second apparatus, a tunable optical wavelength for optical communication of the second apparatus

930

Transmit tunable optical wavelength information for the tunable optical wavelength to the second apparatus via the optical signal having the fixed optical wavelength

## FIG. 9

1000

1010

Receive initialization information from a first apparatus via an optical signal having a fixed optical wavelength, wherein the initialization information at least comprises synchronization information for a network device associated with the second apparatus

1020

Synchronize the network device based on the synchronization information

1030

Receive, from the first apparatus and via the optical signal having the fixed optical wavelength, tunable optical wavelength information for the tunable optical wavelength for optical communication of the second apparatus

1040

Configure, based on the received tunable optical wavelength information for the tunable optical wavelength, tunable circuit parameters corresponding to the tunable optical wavelength to generate an optical signal having the tunable optical wavelength for optical communication

# FIG. 10

1100

Communication
module — 1140

Processor — 1110

Memory — 1120

RAM — 1122

ROM — 1124 — 1130

**FIG. 11**

1230

1200

**FIG. 12**

Europäisches
Patentamt

European
Patent Office

Office européen
des brevets

# EUROPEAN SEARCH REPORT

**Application Number**

EP 24 19 8959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIANNOULIS GIANNIS ET AL: "Integrated Photonic Filters for Flexible Analog-based Mobile Fronthauling", 2019 INTERNATIONAL WORKSHOP ON FIBER OPTICS IN ACCESS NETWORKS (FOAN), IEEE, 2 September 2019 (2019-09-02), pages 11-15, XP033674731, DOI: 10.1109/FOAN.2019.8933752 [retrieved on 2019-12-16] * sections I and II; figures 1a,1b,2a * | 1-13 | INV. H04B10/572 H04J14/02 |
| A | TIAN YU ET AL: "A 60-GHz Radio-Over-Fiber Fronthaul Using Integrated Microwave Photonics Filters", IEEE PHOTONICS TECHNOLOGY LETTERS, IEEE, USA, vol. 29, no. 19, 1 October 2017 (2017-10-01), pages 1663-1666, XP011660134, ISSN: 1041-1135, DOI: 10.1109/LPT.2017.2742526 [retrieved on 2017-09-08] * sections I and III; figures 2,4,5,6 * | 1-13 | |
| A | WO 2023/117076 A1 (ERICSSON TELEFON AB L M [SE]) 29 June 2023 (2023-06-29) * the whole document * | 1-13 | TECHNICAL FIELDS SEARCHED (IPC) H04B H04J |

The present search report has been drawn up for all claims

| Place of search | Date of completion of the search | Examiner |
|---|---|---|
| Munich | 30 January 2025 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8959

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | Publication date |
|---|---|---|---|
| WO 2023117076 A1 | 29-06-2023 | EP 4454161 A1<br>WO 2023117076 A1 | 30-10-2024<br>29-06-2023 |

For more details about this annex : see Official Journal of the European Patent Office, No. 12/82